(19) Europäisches Patentamt
European Patent Office
Office européen des brevets

(11) Publication number: **0 072 077**
**B1**

(12) **EUROPEAN PATENT SPECIFICATION**

(45) Date of publication of patent specification: **29.04.87**

(51) Int. Cl.[4]: **C 08 F 10/00**, C 08 F 4/62

(21) Application number: **82200994.0**

(22) Date of filing: **05.08.82**

(54) **Process for preparing a copolymerization catalyst and preparation of ethylene polymers with this catalyst.**

(30) Priority: **06.08.81 NL 8103700**

(43) Date of publication of application:
**16.02.83 Bulletin 83/07**

(45) Publication of the grant of the patent:
**29.04.87 Bulletin 87/18**

(84) Designated Contracting States:
**AT BE DE FR GB IT NL SE**

(56) References cited:
**GB-A-1 575 352**
**US-A-3 708 465**

**R.A.V.RAFF and R.W.DOAK: "High Polymers", vol. XX, 1965, part I, "Crystalline Olefin Polymers", John Wiley and Sons Inc., London (GB);**

(73) Proprietor: **STAMICARBON B.V.**
**Mijnweg 1**
**NL-6167 AC Geleen (NL)**

(72) Inventor: **van de Leemput, Lambertus J. M. Augustinus**
**Imkerstraat 16**
**NL-6101 GW Echt (NL)**
Inventor: **Nooijen, Godefridus Arnoldus H.**
**Gouv. Houbenstraat 16**
**NL-5981 BL Helden-Panningen (NL)**

(74) Representative: **Hoogstraten, Willem Cornelis Roeland et al**
**OCTROOIBUREAU DSM Postbus 9**
**NL-6160 MA Geleen (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 072 077 B1**

## Description

The invention relates to a process for preparing a chromium-containing catalyst for the polymerization of olefins by first preparing a catalyst component by applying to an inert inorganic support, in particular silica, a complex or complexes of a chromium compound and optionally other transition-metal compounds with one or more organometallic compounds of a metal of group II or III of the periodic system in which hydrocarbyl groups with 1—20 carbon atoms are bonded to this metal, and afterwards, heating the catalyst component at a temperature of 200—1200°C in a non-reducing atmosphere.

The invention relates to the polymerization with such a catalyst of a 1-alkene with 2—8 carbon atoms, in particular ethylene, whether or not together with minor amounts of at most 15 mole % of one or more other 1-alkenes with 2—15 carbon atoms.

Similar processes are known from NL—A—76 05535, or are described in the non-prepublished NL—AA—80 02599 and 80 06167.

The chromium (III) compound is converted with organometallic compounds of a metal from group II or III of the periodic system, such as beryllium, magnesium, boron, aluminium or gallium. The hydrocarbyl groups in these compounds are preferably alkyl groups with 1—20 carbon atoms.

Suitable organometallic compounds are in particular aluminium trialkyls and the magnesium dialkyls. The alkyl groups in the magnesium dialkyls preferably contain 2 to 12 carbon atoms, in particular 4 to 8 carbon atoms. Suitable organomagnesium compounds are diethyl magnesium, ethylbutyl magnesium, dipropyl magnesium, diisopropyl magnesium, dibutyl or di-isobutyl magnesium, diamyl magnesium, dihexyl magnesium, dioctyl magnesium, didecyl magnesium, didodecyl magnesium, but also dicycloalkyl magnesium with identical or different cycloalkyl groups with 3—12 carbon atoms, preferably 5 or 6 carbon atoms. Also, there may be an alkyl and a cycloalkyl group bonded to magnesium. Although alkyl or cycloalkyl magnesium compounds are preferred, magnesium aryls may also be used, particularly diphenyl magnesium, but also ditolyl and dixylyl magnesium. The diaryl magnesium compounds are insoluble or poorly soluble in aliphatic hydrocarbons and, for that reason, are dissolved in aromatic hydrocarbons. The organomagnesium compounds may be prepared in a known manner (see e.g. Organometallic Compounds; Vol. 1; G. E. Coates; M. L. H. Green and K. Wade; Organometallverbindungen; F. Runge). In particular, use is made of solutions of magnesium alkyls prepared according to the process described in NL—A—139.981.

Suitable aluminium compounds are aluminium trialkyls and organoaluminium compounds having the general formula $(R_4)_2AlH$, where $R_4$ denotes an alkyl group having 1—10 carbon atoms. Aluminium compounds containing one or more groups derived from a diene, as known from, for instance, DE—AA—1,956,353; 1,183,084, 1,136,113 and 1,186,633, may also be employed.

The reaction of the chromium compound with an organomagnesium or organoaluminium compound or another metal from group II or III is carried out in a solvent that is inert relative to this compound. Preferably, this reaction is carried out in a hydrocarbon solvent, particularly in one or more linear or branched aliphatic hydrocarbons, such as butane, pentane, hexane, heptane, octane, decane, or the branched isomers, or in a low-boiling gasoline consisting mainly of hexanes and/or heptanes, or a higher-boiling gasoline. Also higher linear or branched saturated aliphatic hydrocarbons or mixtures thereof can be used as solvent. Although the chromium (III) compounds dissolve more readily in aromatic hydrocarbons than in aliphatic hydrocarbons and can be reacted with magnesium diaryls that are soluble in aromatic hydrocarbons, there is a general tendency not to use aromatic hydrocarbon solvents if adequate realizations of the process in aliphatic and/or cycloaliphatic solvents are available, in view of the high cost of aromatic hydrocarbon solvents and also because of the possible dangers to health.

Most chromium compounds will in part be dispersed on account of their low solubility in aliphatic and/or cycloaliphatic hydrocarbons. However, upon addition of an organomagnesium or organoaluminium compound, these compounds will, at least partly, dissolve. Dissolution is promoted by gentle heating, e.g. at temperatures of 40—100°C or, if low-boilings solvents are used, to the boiling point of the solvent (whether or not under pressure). The compounds slightly colour the hydrocarbon solvent because of small part of them dissolves. Addition of the organomagnesium or organoaluminium compounds yield dark-coloured solutions.

Very suitable chromium compounds are complexes of chromium with 1,3-diketo compounds, such as, for instance, chromium (III) acetyl acetonate, or chromium salts of mineral acids or of saturated or unsaturated aliphatic carboxylic acids.

Besides the chromium, also compounds or complexes of one or more other transition metals can be deposited on the support, the ratios of the chromium to the other transition metals admitting of variation within wide limits.

In general, such an amount of transition metals will be used that the atomic ratio of chromium to other transition metals is between 50:1 and 1:50, preferably between 20:1 and 1:20, and more in particular between 10:1 and 1:10.

The polymer properties can be influenced by the choice of the transition metals added and their molar ratio to the chromium.

The molar ratio of the chromium compounds, and any other compounds of transition metals used, to the organometallic compounds, expressed as the atomic ratio of the transition metal to the metal of group II or III, is chosen between 1:0.5 and 1:20, preferably between 1:1 and 1:6.

The solution of the complex of a chromium compound and an organometallic compound and of the separately or simultaneously prepared complexes of other transition metals and an organometallic compound is combined with an inert inorganic support, for instance by slowly, and with stirring, adding the solution to a support suspended in the solvent. The complexes can be deposited on the support by evaporation, insofar as they do not wholly or largely deposit straight away from the solution onto the support. If the complexes deposit onto the support from the solution this is well visible because all or much of the colour of the solution vanishes and the support is coloured.

The inert inorganic support is preferably an oxide, such as silica, alumina, mixed alumina-silica, or oxides of zirconium, thorium or magnesium. Among these oxides, preference is given to silica, alumina and mixed alumina-silica, more in particular to silica. Silica is known, and can be used, in many different forms. Particularly suitable are silica xerogels of large pore volume.

If desired, during or after preparation the silica can be combined with other components, such as fluorine and titanium, in any known manner. Alternatively, these compounds can be deposited during or after the activation of the catalyst.

The support is dried, insofar as this is necessary, for instance by heating in dry air or nitrogen, before the compounds of the transition metals are deposited on it. Drying should be such that the support is preferably free of physically bound water.

The amount of complex chromium compounds deposited on the support may vary within wide limits but will generally be in the range of 0.01—10% by wt. calculated as chromium on the support. In addition, compounds of other transition metals can, of course, be deposited on the support, in the ratios to chromium mentioned above.

The catalyst components thus prepared have now been found to contain highly reactive hydrocarbyl groups from the complexes deposited.

Not only does this present difficulties in separating out the catalyst component, because during this procedure contact with air must be avoided so as to prevent a spontaneous rise in temperature of the catalyst, but these reactive hydrocarbyl groups are moreover a potential danger if the catalysts are activated, during which procedure the catalyst component obtained is heated in a non-reducing atmosphere at a temperature of 200—1200°C.

During this activation, the alkyl groups are split off at relatively low temperatures already, forming alkenes and alkanes. This splitting-off is a rapid process, so that the fluidization gas comes to contain considerable amounts of these hydrocarbons. The explosive limit is then closely approximated or even well transgressed, and ignition by a spark or an electrostatic charge can lead to explosive combustion.

It has now been found that it is possible to prepare a chromium-containing catalyst for the polymerization of olefins with avoidance of the drawbacks mentioned above, by first preparing a catalyst component by applying to an inert inorganic support, in particular silica, a complex or complexes of a chromium compound and optionally other transition-metal compounds with one or more organometallic compounds of a metal of group II or III of the periodic system, in which hydrocarbyl groups with 1—20 carbon atoms are bonded to this metal, and then — this is what characterizes the invention — subjecting the support with the complex(es) deposited on it to a treatment with an atmosphere containing molecular oxygen at a temperature of less than 100°C, or with an alcohol, and finally heating the catalyst component at a temperature of 200—1200°C in a non-reducing atmosphere.

The catalyst component can, for instance, be cautiously reacted with oxygen, which is a first specific mode of realization of the invention. In this procedure, the catalyst component is separated from the reaction mixture in an inert atmosphere, and preferably dried under a stream of inert gas in order to expel solvent residues, after which the catalyst component is contacted with an oxygen-containing atmosphere.

This can be done very suitably by introducing air into the reaction vessel containing the catalyst component, controlling the rate of airflow and an optional cooling in such a way that the temperature never exceeds 100°C.

A second, more preferred mode of realization of the invention comprises the deactivation of the hydrocarbyl groups with the aid of an alcohol, preferably with an alcohol having 1—3 carbon atoms.

In this procedure, the amount of alcohol required for the deactivation can be added direct to the reaction mixture, as soon as the complexes of the chromium with an organometallic compound have been deposited on the support.

In this way, the heat released during the reaction is easily absorbed by the reaction milieu.

The deactivation of the hydrocarbyl groups by an alcohol is a fairly rapid process; reaction times ranging from less than half an hour to a few hours are usually suitable.

In the case of deactivation with oxygen, the deactivated hydrocarbyl group remains bonded to the catalyst component, apparently through an oxygen atom, according to the following, schematical, reaction equation:

$$\text{Kat.} - \text{R} + 0{,}5\ \text{O}_2 \rightarrow \text{Kat.} - \text{O} - \text{R},$$

where R denotes a hydrocarbyl group.

In the case of deactivation with alcohol, the hydrocarbyl group of the catalyst component is replaced by the alkoxy group of the alcohol, according to the schematical reaction equation:

$$\text{Kat.R} + \text{Alkyl OH} \rightarrow \text{Kat}-\text{O}-\text{Alkyl} + \text{RH},$$

where R denotes a hydrocarbyl group.

In this case, larger hydrocarbyl groups such as, in particular, the very widely used isobutyl groups, can very suitably be replaced by lower alkoxy groups.

According to the most preferred mode of realization of the invention, deactivation is effected with methanol, so that the hydrocarbyl groups are replaced by the smallest possible alkoxy group.

This is particularly advantageous if the catalyst component is activated by being heated at 200—1200°C in a non-reducing atmosphere, because then the amount of organic material released during heating is limited to a considerable extent.

This is important not only in view of the danger of explosion, but also with regard to the quality of the catalyst obtained.

Under the conditions described above, the organic material is converted into $CO_2$ and water, among other products.

As pointed out by, notably, Hogan, in Journal of Polymer Science Part A—1, Vol. 8, 2637—2652 (1970), the water thus formed is highly detrimental to the chemical structure of the catalyst.

Therefore deactivation of the hydrocarbyl groups of the complex deposited on the catalyst support is preferably effected with oxygen or with alcohol, as explained above, and most preferably with methanol.

After the deactivation of the hydrocarbyl groups the catalyst component is preferably heated in a non-reducing atmosphere, such as oxygen, air, nitrogen, carbon dioxide or a noble gas, at a temperature of 200—1200°C. Preferably, this heating is done in an oxidizing atmosphere, such as, for instance, oxygen, oxygen-containing noble gases or air; obviously, also air with a reduced or increased oxygen content provides an oxidizing atmosphere and can be used as such.

Kat.-O-alkyl bonds as formed in the present process are much more stable than Kat.-alkyl compounds. When a product with Kat.-alkyl compounds is heated in, for instance, air, these compounds start to decompose already at relatively low temperature, for instance 100°C. Decomposition is often noticeable even at temperatures below 100°C. In this situation, mainly alkenes and also alkanes are released. No carbon monoxide or carbon dioxide is formed, which proves that no combustion takes place. Upon a moderate increase in temperature, the rate at which the hydrocarbons are released soon becomes so high that the amount of hydrocarbons in the gas mixture of the fluidized bed comes within the explosive limits. A spark, an electrostatic discharge or even the beginning of self-ignition can then lead to explosive combustion.

When the catalyst has been deactivated to form Kat.-O-alkyl compounds, the product is more stable and releases hydrocarbons, notably alkenes and alkanes, only at higher temperatures, This decomposition generally starts at a temperature of 250°C or higher and proceeds more gradually. In addition, it is accompanied by partial combustion without fire, this combustion being inferable from the presence of carbon monoxide and carbon dioxide in the off-gas, together with the low oxygen content. As the temperature increases, a greater portion of the alkenes released is combusted. Although the rate at which the alkenes and alkanes are released increases considerably as the temperature rises, the alkene and alkane contents of the off-gas soon decrease, because of the rate of combustion increases at the same time. On account of the decreasing oxygen content of the off-gas, the explosive range is rapidly narrowed, and the small amounts of residual alkenes and alkanes lie well outside this explosive range. Therefore, ignition can no longer cause explosive combustion. The partial combustion that does occur is a very gradual and harmless process.

The supported metal compounds are preferably heated at 400—1200°C, more in particular at 500—1000°C.

The heating time may vary in duration from a few seconds to tens of hours or more. At temperatures in the range of 500—1100°C, the heating time may generally be taken between 30 minutes and 8 hours.

The optimum heating period can easily be determined experimentally by one skilled in the art, by preparing catalysts of identical composition under conditions which are identical except for the heating periods, which are varied at a given temperature, and by subsequently determining the polymerization properties of the resulting catalyst.

The heating treatment of the catalyst component is necessary in order to activate it to a useful catalyst.

However, since the activated catalyst is susceptible to external influences, it may be of interest to store, transport and/or trade the catalyst component in the form in which it is obtained after the treatment according to the invention, by which the hydrocarbyl groups of the complexes deposited on the support which are present on the catalyst component are deactivated.

The activation of the catalyst component by means of the heating treatment at a temperature of 200—1200°C can then be done just before the catalyst is going to be used.

By preference, after being cooled to ambient temperature and after air has been expelled by an inert gas, the supported catalyst is introduced into a hydrocarbon solvent which is preferably the polymerization medium. This may consist of aliphatic or cyclic hydrocarbons, such as butane, isobutane, normal or branched pentanes, hexanes, heptanes, octanes and higher linear and/or branched saturated aliphatic hydrocarbons, cyclopentane, cyclohexane, cycloheptane, cyclooctane etc. and mixtures, notably fractions directly or indirectly obtained from mineral oil, such as low-boiling gasoline, kerosine or gas oil, which may possibly contain aromatics, but predominantly consist of aliphatics and/or cycloaliphatics. Also aromatic hydrocarbons, such as

benzene, toluene, xylenes or halogenated hydrocarbons can be used, but on account of practical consideration, viz. cost and health risks, it is usually preferred to make use of aliphatic hydrocarbons or of mineral oil fractions which contain little or no aromatics.

To the supported catalyst dispersed in an inert dispersant, other compounds can be added if desired, such as, for instance, an organometallic compound of an element of group II or III of the periodic system, e.g. beryllium, magnesium, boron, aluminium or gallium. The molar ratio of the organometallic compound of the supported chromium components can then vary within wide limits, e.g. from 0.1:1 to 200:1. Preferably, the ratios lie between 1:1 and 40:1.

To what extent addition of such organometallic compounds is desirable depends on the polymerization conditions and on the polymer desired. At low catalyst concentrations and at relatively low monomer concentrations in the dispersant, the polymerization can often be started and sustained if such organometallic compounds are added. The contaminant levels in monomer and solvent also play a role. By experiment it can easily be established whether addition of said organometallic compounds is desirable.

The suspension polymerizations with the catalysts in question are generally performed at temperatures of at most 100°C. In some volatile solvents, such as, for instance, isobutane, the suspension polymerization can be performed at yet slightly higher temperatures, up to approximately 110°C. By preference, however, polymerization is performed at temperatures of at most 105°C. The polymerization can be performed at approximately 50°C, but temperatures of at least 70°C, more in particular 85°C or higher are preferred.

Ethylene polymerizations with the catalysts in question can also be performed at temperatures above 120°C, for example 150—200°C. A solution of the ethylene polymer in the solvent is then obtained, which can be worked up in a known manner. The polymerization can also be carried out as a so-called gas-phase polymerization, realizations of which are known from, for instance, British Patent Specification 1,373,982. Ethylene can also be copolymerized with at most 15 mole % of one ore more alkenes with 3—15 carbon atoms. It should then be taken into account that the polymerization rate of ethylene is higher than that of the comonomers. In order to copolymerize ethylene with a particular mole percentage of comonomer, more, sometimes even considerably more of that comonomer will have to be present in the reaction mixture. One of ordinary skill in the art is familiar with this and will not have much trouble in establishing the correct proportions in the reaction mixture.

The polymerization can be carried out at atmospheric pressure, but also at elevated pressure. Where low-boiling dispersants are employed, such as, for example, butane, isobutane and pentane, the pressure in the reactor will have to be higher than atmospheric. The monomer pressure may be atmospheric, but is preferably higher. By performing the polymerization at elevated monomer pressure, higher yields can be obtained, so that elevated pressures up to, for instance, 10 MPa will normally be used. Higher pressures, even up to e.g. 200 MPa or more, are possible but are not usually employed for practical reasons.

Preferably, polymerization is carried out at pressures between 600 and 8000 kPa, more in particular between 1200 and 5000 kPa. The pressure to be chosen will in part depend on the polymerization temperature and the volatility of the dispersant.

The monomer pressure will in part be determined by the outcome of the weighing of the cost and the safety of an installation for relatively high pressures, as compared with an installation for relatively low pressures, against the polyethylene production level at high and low pressure, respectively. The factors determining the eventual choice of the monomer pressure are mainly economic.

The amount of catalyst used is normally such that the content of chromium and any other transition metals in the dispersant is in the 0.001—10 mmoles per litre range, preferably 0.001—0.1 mmoles per litre.

The present process lends itself to known modifications. For example, the molecular weight may be controlled not only through the temperature but also by addition of hydrogen or other modifying agents conventionally used for the purpose. The polymerization may also be carried out in two or more parallel or series-arranged stages, in which, optionally, different catalyst compositions, temperatures, residence times, pressures, hydrogen concentrations etc. can be applied.

The invention is further explained by the following examples, but is not restricted to them.

## Example 1

*Preparation of a catalyst component consisting of a silica-supported chromium acetyl acetonate/triisobutyl aluminium complex*

In a thoroughly dried 250 ml flask provided with a stirrer, a dropping funnel and a reflux cooler, 33.6 g (0.096 mol) chromium (III) acetyl acetonate ($Cr(AcAc)_3$) is suspended in 90 ml dry gasoline, under an atmosphere of dry nitrogen. This suspension is heated, with stirring, to the boiling point, whereupon 72.8 ml of a 3.97 molar solution of triisobutyl aluminium (TIBA) is added to it dropwise. A strongly exothermic reaction takes place, during which formation of gas is observed, approximately 6.5 litres of a mixture of isobutane and isobutylene being formed. The reaction is continued for 1 hour at reflux temperature. The complex solution obtained is dark brown in colour and contains only traces of precipitate. Before being processed further, the solution is first isolated by filtration.

1 kg of silica support is predried for 4 hours at

200°C, dry air being passed through. After the air has been replaced by nitrogen, the silica support is suspended in approx. 5 litres of gasoline in a 10 litre flask.

To this suspension the filtered solution of the $Cr(AcAc)_3$/TIBA-complex is added dropwise, at room temperature and with vigorous stirring. Stirring is continued for 1 hour. The gasoline has now completely lost its colour and the complex has deposited on the silica support.

Example 2

*Deactivation of the catalyst component with oxygen and consecutive heating in a non-reducing atmosphere*

By filtering the suspension obtained according to Example 1, the gasoline is for the greater part removed. The residue is removed at elevated temperature by blowing dry nitrogen into the bottom of the reaction vessel.

After cooling to ambient temperature, the catalyst component obtained is subsequently cautiously treated with dry air, the supply of $O_2$ being controlled in such a way that the temperature never exceeds 100°C.

500 g of the catalyst component thus prepared is introduced into a fluid bed reactor with a volume of 8 litres and an L/D ratio of 10. Air is introduced into the reactor at such a rate that the linear velocity is $1.8 \times 10^{-2}$/sec. The reactor is heated up at the rate of 135°C/hour, to a final temperature of 900°C. This final temperature of 900°C is maintained for 8 hours. The gas issuing from the fluidized bed is analyzed at regular intervals. Decomposition of the catalyst is found to start at approximately 250°C, giving rise to the release of mainly butylenes, besides minor amounts of propylene, ethylene and methane. Also small amounts of carbon monoxide and carbon dioxide are found. The oxygen content is slightly lower than that of the air led into the fluidized bed. At 375°C virtually no butylenes, but almost exclusively minor amounts of methane are found. The amounts of carbon monoxide and carbon dioxide are considerably larger and the oxygen content is no more than 13.8% by vol.

Example 3

*Deactivation of the catalyst component with methanol and consecutive heating in a non-reducing atmosphere*

To the suspension obtained according to Example 1, 17 g methanol is added at room temperature.

After half an hour of stirring, the suspension is recovered by filtration. The catalyst is subsequently dried by passing dry nitrogen into it.

500 g of the catalyst component thus prepared is heated for 8 hours at 900°C in the fluid-bed phase in air, in accordance with Example 2. The off-gas is analyzed at regular intervals. Again, the decomposition is found to start at 250°C, but mainly methane evolves, besides small amounts of carbon monoxide and carbon dioxide. As the temperature rises, the amounts of carbon monoxide and carbon dioxide are seen to increase, and the amount of methane is even found to decrease, after an initial increase.

Example 4

*Polymerization of ethylene using the catalyst of Example 2*

Into a stirred reactor (5 litres), 1.2 kg dry isobutane is introduced. After the contents of the reactor have been raised to a temperature of 91°C, ethylene is forced in until the reactor pressure is 24 bar. Finally, 280 mg of the catalyst component obtained according to Example 2 is added. Polymerization is performed for 135 minutes, during which the total pressure in the reactor is kept constant by forcing ethylene into the reactor. The contents of the reactor are kept at 91°C throughout the polymerization.

The polyethylene yield is 3600 gram per gram of catalyst.

Example 5

*Polymerization of ethylene using the catalyst of Example 3*

Into a stirred reactor (5 litres), 1.2 kg dry isobutane is introduced. After the contents of the reactor have been raised to a temperature of 98°C, first hydrogen at 2.5 bar is forced into the reactor, and next ethylene, until the total pressure is 28 bar. Finally, 455 mg of the catalyst prepared according to Example 3 is added. Polymerization is performed for 50 minutes, during which the total pressure in the reactor is kept constant by forcing in ethylene. Throughout the polymerization, the temperature of the contents of the reaction vessel is maintained at 98°C.

The polyethylene yield is 2460 grams per gram of catalyst.

Example 6

A complex of 33.6 g (0.096 moles) chromium(III) acetyl acetonate and 288 mmoles dibutyl magnesium is prepared according to the process of Example 1. The dibutyl magnesium has been dissolved in low-boiling gasoline with 10 mole % of triethyl aluminium, to form a 0.35 molar solution. The chromium(III) acetyl acetonate/tri(dibutyl)-magnesium complex is deposited on a silica support according to the process of Example 1, and next the alkyl groups are deactivated with methanol, and the catalyst is activated, according to the process of Example 3.

Into a stirred reactor (5 litres), 1.2 kg dry isobutane is now introduced. After the contents of the reactor have been raised to a temperature of 98°C, hydrogen at 2.5 bar is forced in, and next ethylene is forced in to a total pressure of 27 bar. Next triethyl boron (TEB) is added until the boron content of the polymerization medium is 2 ppm. Finally, 340 mg of the catalyst is added. Polymerization is performed for 75 minutes, during which the total pressure in the reactor is kept constant by forcing ethylene into the reactor, and the temperature is maintained at 98°C. The polyethylene yield is 2460 grams per gram of catalyst.

**Claims**

1. Process for preparing a chromium-containing catalyst for the polymerization of olefins by first preparing a catalyst component by applying to an inert inorganic support, in particular silica, a complex or complexes of a chromium compound and optionally other transition-metal compounds with one or more organometallic compounds of a metal of group II or III of the periodic system in which hydrocarbyl groups of 1—20 carbon atoms are bonded to this metal, and afterwards heating the catalyst component at a temperature of 200—1200°C in a non-reducing atmosphere, this process being characterized in that the catalyst component is subjected to a treatment with an atmosphere containing molecular oxygen at a temperature of less than 100°C, or with an alcohol, before the heat-treatment at 200—1200°C.

2. Process according to claim 1, characterized in that the catalyst component is treated with oxygen.

3. Process according to claim 2, characterized in that the catalyst component is treated with a stream of air which may or may not be enriched with oxygen or an inert gas.

4. Process according to claim 1, characterized in that the catalyst component is treated with an alcohol with 1—3 carbon atoms.

5. Process according to claim 4, characterized in that methanol is used.

6. Process for the polymerization of a 1-alkene with 2—8 carbon atoms, whether or not together with minor amounts of at most 15 mole % of one or more other 1-alkenes with 2—15 carbon atoms, preferably ethylene, if desired with at most 10 mole % olefin with 3—8 carbon atoms, in the presence of a catalyst obtained by the process according to any one of the claims 1—5.

7. Process according to claim 6, characterized in that the catalyst component has been treated with oxygen or with air which may or may not have been enriched with oxygen, without external heating having been applied.

8. Process according to claim 6, characterized in that the catalyst component has been treated with an alcohol with 1—3 carbon atoms.

9. Process according to claim 8, characterized in that the catalyst component has been treated with methanol.

**Patentansprüche**

1. Verfahren zur Herstellung eines chromhältigen Katalysators für die Polymerisation von Olefinen durch Herstellen zuerst einer Katalysatorkomponente durch Aufbringen eines Komplexes oder von Komplexen einer Chromverbindung und wahlweise anderer Übergangsmetallverbindungen mit einer oder mehreren metallorganischen Verbindungen eines Metalls der Gruppe II oder III des Periodensystems, worin Hydrocarbylgruppen mit 1 bis 20 Kohlenstoffatomen an dieses Metall gebunden sind, auf einen inerten anorganischen Träger, insbesondere Silika, und anschließendes Erhitzen der Katalysatorkomponente auf eine Temperatur von 200 bis 1200°C in einer nichtreduzierenden Atmosphäre, wobei dieses Verfahren dadurch gekennzeichnet ist, daß die Katalysatorkomponente einer Behandlung mit einer molekularen Sauerstoff enthaltenden Atmosphäre bei einer Temperatur von weniger als 100°C oder mit einem Alkohol vor der Wärmebehandlung bei 200 bis 1200°C unterzogen wird.

2. Verfahren nach Anspruch 1, dadurch gekennzeichnet, daß die Katalysatorkomponente mit Sauerstoff behandelt wird.

3. Verfahren nach Anspruch 2, dadurch gekennzeichnet, daß die Katalysatorkomponente mit einem Luftstrom, welcher mit Sauerstoff oder einem Inertgas angereichert sein kann oder nicht, behandelt wird.

4. Verfahren nach Anspruch 2, dadurch gekennzeichnet, daß die Katalysatorkomponente mit einem Alkohol mit 1 bis 3 Kohlenstoffatomen behandelt wird.

5. Verfahren nach Anspruch 4, dadurch gekennzeichnet, daß Methanol verwendet wird.

6. Verfahren zur Polymerisation eines 1-Alkens mit 2 bis 8 Kohlenstoffatomen, zusammen mit oder ohne geringe Mengen von höchstens 15 Mol-% eines oder mehrerer anderer 1-Alkene mit 2 bis 15 Kohlenstoffatomen, vorzugsweise Ethylen, gewünschtenfalls mit höchstens 10 Mol-% Olefin mit 3 bis 8 Kohlenstoffatomen, in Gegenwart eines durch das Verfahren nach einem der Ansprüche 1 bis 5 erhaltenen Katalysators.

7. Verfahren nach Anspruch 6, dadurch gekennzeichnet, daß die Katalysatorkomponente mit Sauerstoff oder mit Luft, welche mit Sauerstoff angereichert sein kann oder nicht, ohne Wärmezufuhr von außen behandelt wurde.

8. Verfahren nach Anspruch 6, dadurch gekennzeichnet, dass die Katalysatorkomponente mit einem Alkohol mit 1 bis 3 Kohlenstoffatomen behandelt wurde.

9. Verfahren nach Anspruch 8, dadurch gekennzeichnet, dass die Katalysatorkomponente mit Methanol behandelt wurde.

**Revendications**

1. Procédé de préparation d'un catalyseur contenant du chrome pour la polymérisation d'oléfines qui consiste à préparer d'abord un constituant catalytique en appliquant sur un support inerte, en particulier de la silice, un complexe ou des complexes d'un composé du chrome, et éventuellement d'autres composés de métaux de transition, avec un ou plusieurs composés organométalliques d'un métal du groupe II ou III de la classification périodique, dans lequel des groupes hydrocarbyle comportant 1 à 20 atomes de carbone sont fixés à ce métal, et à chauffer ensuite le constituant catalytique à une température de 200 à 1200°C dans une atmosphère non réductrice, ce procédé étant caractérisé en ce que l'on soumet le constituant catalytique à un traitement

avec une atmosphère contenant de l'oxygène moléculaire à une température inférieure à 100°C, ou avec un alcool, avant le traitement thermique à 200—1200°C.

2. Procédé selon la revendication 1, caractérisé en ce que l'on traite le constituant catalytique avec de l'oxygène.

3. Procédé selon la revendication 2, caractérisé en ce que l'on traite le constituant catalytique avec un courant d'air qui peut être ou ne pas être enrichi d'oxygène ou d'un gaz inerte.

4. Procédé selon la revendication 1, caractérisé en ce que l'on traite le constituant catalytique avec un alcool comportant 1 à 3 atomes de carbone.

5. Procédé selon la revendication 4, caractérisé en ce que l'on utilise le méthanol.

6. Procédé de polymérisation d'un 1-alcène comportant 2 à 8 atomes de carbone, avec ou sans des quantités mineures d'au plus 15% en mole d'un ou plusieurs autres 1-alcènes comportant 2 à 15 atomes de carbone, de préférence d'éthylène, éventuellement avec au plus 10% en mole d'oléfine comportant 3 à 8 atomes de carbone, en présence d'un catalyseur obtenu par le procédé selon l'une quelconque des revendications 1 à 5.

7. Procédé selon la revendication 6, caractérisé en ce que le constituant catalytique a été traité avec de l'oxygène ou avec de l'air qui peut avoir été ou ne pas avoir été enrichi en oxygène, sans avoir appliqué de chauffage externe.

8. Procédé selon la revendication 6, caractérisé en ce que le constituant catalytique a été traité avec un alcool comportant 1 à 3 atomes de carbone.

9. Procédé selon la revendication 8, caractérisé en ce que le constituant catalytique a été traité avec du méthanol.